# EUROPÄISCHE PATENTSCHRIFT

(11) **EP 1 158 653 B1**
(45) Veröffentlichungstag und Bekanntmachung des Hinweises auf die Patenterteilung: **15.08.2007**
(21) Anmeldenummer: 01105558.9
(22) Anmeldetag: 06.03.2001
(51) Int. Cl.: H02K 41/035, F16F 15/03

(54) **Elektromechanischer Linearantrieb mit Momentenkompensation**
Electromechanical linear drive with torque compensation
Actionneur linéaire électromécanique avec compensation de couple

(30) Priorität: 18.04.2000 DE 10019226
(43) Veröffentlichungstag der Anmeldung: 28.11.2001
(73) Patentinhaber: Physik Instrumente (PI) GmbH & Co., 76337 Waldbronn (DE)
(72) Erfinder: Kovalev, Sergej, 76337 Waldbronn (DE); Glöss, Reiner, Dr., 76307 Karlsbad (DE)
(74) Vertreter: Kruspig, Volkmar

(56) Entgegenhaltungen:
- US-A- 5 239 340
- US-A- 5 283 682
- US-A- 5 959 427
- US-A1- 2001 003 028

## Beschreibung

Die Erfindung betrifft einen elektromechanischen Linearantrieb nach dem Oberbegriff des Anspruchs 1.

Derartige Linearantriebe (Vgl. US-A-5959427 und US-A-5239340) sind bekannt und werden beispielsweise zum Antrieb von Zeilenscannern eingesetzt.

Hierbei müssen Arbeitshübe im Bereich von mehreren Millimetern mit einer vergleichsweise hohen Dynamik im Bereich von einigen Hertz für eine Last (Arbeitstisch) realisiert werden, die typischerweise eine Gesamtmasse im Bereich zwischen 50 und einigen hundert Gramm hat. An den Umkehrpunkten treten dabei Beschleunigungen von einem Vielfachen der Erdbeschleunigung auf. Durch diese hohen Beschleunigungen wird das System in unerwünschter Weise in Schwingungen versetzt, die einer hochpräzisen und exakt reproduzierbaren Betriebsweise abträglich sind. Zur Erfüllung der im praktischen Einsatz gestellten Anforderungen muß daher eine weitgehende Momentenkompensation erreicht werden.

Der Erfindung liegt daher die Aufgabe zugrunde, einen gattungsgemäßen Linearantrieb mit einer hocheffizienten Momentenkompensation anzugeben.

Diese Aufgabe wird durch einen elektromechanischen Linearantrieb mit den Merkmalen des Anspruchs 1 gelöst.

Die Erfindung schließt den wesentlichen Gedanken einer aktiven Momentenkompensation durch einen dem eigentlichen Antrieb zugeordneten Kompensations-Antrieb ein. Hierdurch kann nach den Erkenntnissen der Erfinder eine Kompensation der Reaktionskräfte zu über 95 % mit unterschiedlichen Lasten und unter variierenden Betriebsbedingungen erreicht werden. Auf dieser Grundlage wird ein hochpräziser Linearantrieb mit großem Bewegungsbereich geschaffen, der einen geringen Leistungsverbrauch aufweist und bei dem nur verschwindend kleine Reaktionen und Momente am Gehäuse bzw. der Lagerung auftreten.

In einer bevorzugten Ausführung liegen die Bewegungsbahnen der Aktoren des eigentlichen Antriebes und des Kompensations-Antriebes sowie die mit diesen verbundenen Lasten bzw. Massen auf einer Geraden, so daß prinzipiell keine störenden Quermomente auftreten können. Für spezielle Einsatzzwecke kann aber auch eine Anordnung mit seitlich gegeneinander versetzten Bewegungsbahnen von Haupt- und Kompensations-Antrieb zweckmäßig sein.

Weiterhin umfaßt der Antrieb bevorzugt ein die Rückstellelemente - speziell Schraubenfedern - aufnehmendes Gehäuse, das zugleich die Widerlagerflächen bereitstellt und starr miteinander verbindet, gegen die sich die Rückstellelemente abstützen. Hierbei handelt es sich insbesondere um senkrecht zu den Bewegungsbahnen der Aktoren stehende und folglich zueinander parallele Wandungen am bzw. im erwähnten Widerlager- bzw. Federgehäuse. Dieses wiederum ist insbesondere starr mit einem Antriebsgehäuse verbunden, das den Antrieb insgesamt aufnimmt und schützt.

Eine kompakte und zugleich das Zusammenwirken der mechanischen Komponenten optimierende, speziell Taumelfehler weitgehend reduzierende Bauweise sieht vor, daß die erste Last (der Arbeitstisch) und die zweite Last (die Kompensationsmasse) jeweils über eine Antriebsstange, die von den zugehörigen Schraubenfedern umgeben ist, mit dem Aktor des jeweiligen Antriebes verbunden ist. Die Verbindungslinie sollte nach Möglichkeit mit den Massenmittelpunkten ausgerichtet sein oder jedenfalls in deren Nähe verlaufen.

Im Interesse einer kompakten Bauweise liegt auch eine derartige Dimensionierung des Kompensations-Antriebes, daß dessen Masse wesentlich -insbesondere um einen Faktor 2 bis 10 - größer als die Masse der dem eigentlichen Antrieb zugeordneten Last ist. Hierdurch wird, im Kombination mit einer entsprechend erhöhten Federsteifigkeit der dem Kompensations-Antrieb zugehörigen Rückstellelemente, die erwünschte dynamischen Kompensation mit relativ kleinen Amplituden des Kompensations-Antriebes erreicht. Hierdurch kann die Baulänge des Antriebsgehäuses relativ klein gehalten werden.

Zur Erzielung einer optimalen Kompensationswirkung ist eine exakt gegenphasige Steuerung von Haupt- und Kompensations-Antrieb wichtig. In einer bevorzugten Ausführung ist daher dem ersten und dem zweiten Aktor jeweils ein Positionssensor zugeordnet, und diese Positionssensoren sind mit der Kompensations-Steuereinrichtung verbunden.

Weiterhin ist eine Ausführung von Vorteil, bei der die Amplituden der ersten und zweiten Bewegungsbahn, d. h. der Aktoren und Lasten des Haupt- und des Kompensations-Antriebes, über einen Regelkreis (unter Nutzung der Signale der erwähnten Positionssensoren) konstant gehalten werden.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren. Von diesen zeigen:
- Fig. 1: eine Gesamtansicht eines Zeilenscannerantriebes gemäß einer Ausführungsform der Erfindung in perspektivischer Darstellung,
- Fig. 2: eine Gesamtansicht des Innenaufbaus des Zeilenscannerantriebes nach Fig. 1 ohne Antriebsgehäuse in perspektivischer Darstellung,
- Fig. 3: eine Ansicht des Zeilenscannerantriebes ohne Federbzw. Widerlagergehäuse in perspektivischer Darstellung,
- Fig. 4: eine Prinzipskizze zur Erläuterung der vorgeschlagenen aktiven Momentenkompensation und
- Fig. 5: ein Funktions-Blockschaltbild zur Erläuterung des Ansteuer- bzw. Regelprinzips bei einer bevorzugten Ausführungsform der Erfindung.

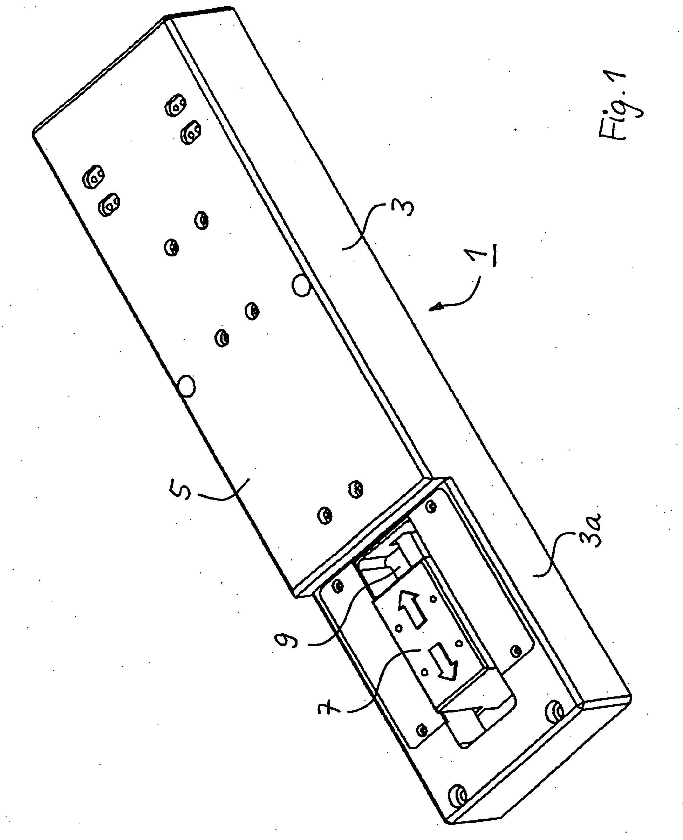

In Fig. 1 ist eine elektromechanische Linearantriebseinheit 1 zum Einsatz bei einem Zeilenscanner in einer perspektivischen Außenansicht dargestellt. Die Linearantriebseinheit 1 hat ein im wesentlichen geschlossenes, flach quaderförmiges Antriebsgehäuse 3 mit einer Deckplatte 5, wobei das Antriebsgehäuse 3 in einem seiner stirnseitigen Randbereiche einen Abschnitt 3a mit verringerter Höhe hat, dessen Oberfläche von der Deckplatte 5 nicht bedeckt ist. Hier liegt also das Innere der Antriebseinheit partiell frei, und zwar derart, daß die Oberfläche eines zu einer translatorischen Schwingungsbewegung angetriebenen Arbeitstisches 7 von außen zugänglich ist. In der Figur ist auch ein Abschnitt einer (ersten) Antriebsstange 9 zu erkennen, mit der der Arbeitstisch 7 verbunden ist und über die er angetrieben wird.

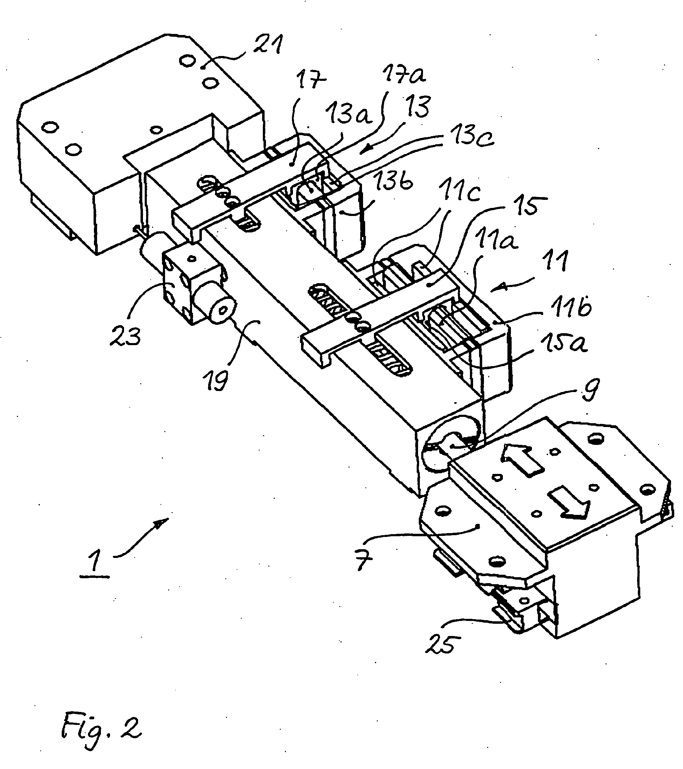

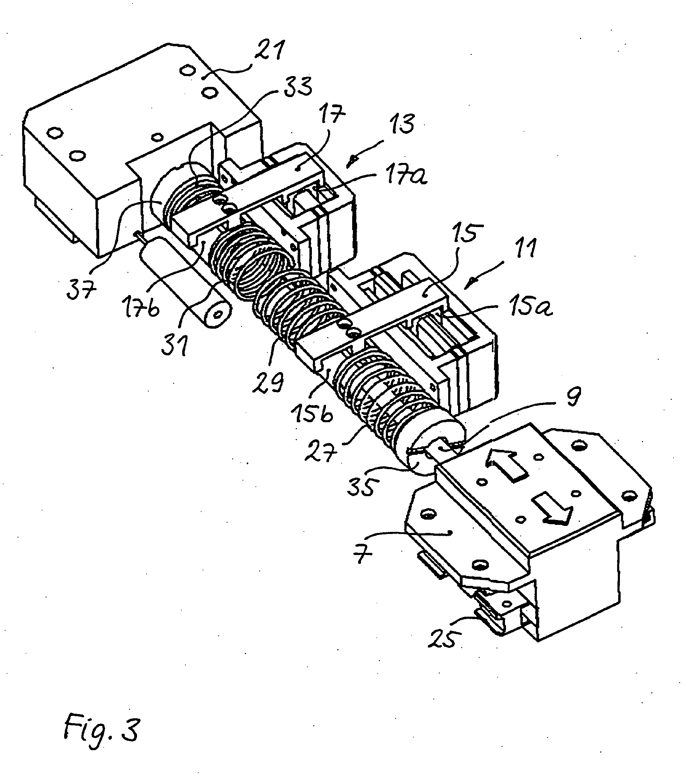

Fig. 2 zeigt den Innenaufbau der Linearantriebseinheit 1 genauer. Es ist zu erkennen, daß die Antriebseinheit zwei Aktoren 11, 13 aufweist, die jeweils eine Kurzschlußplatte 11a, 13a mit einem Ringkern 11b, 13b und zwei innen an dessen Längsseiten angeordnete, flach quaderförmige Permanentmagnete 11c, 13c umfaßt. Über den Kurzschlußplatten 11a, 13a ist, die jeweilige Wicklung umgreifend und der Kurzschlußplatte gegenüber gleitbar, eine erste bzw. zweite kraftübertragende Gabel (Ausleger) 15 bzw. 17 angeordnet. Beide kraftübertragenden Gabeln 15, 17 tragen jeweils eine die zugehörige Kurzschlußplatte 11a bzw. 13a umgreifende Antriebsspule 15a, 17a. Sie übergreifen ein langgestrecktes Federgehäuse 19. Die in diesem Federgehäuse 19 angeordneten Komponenten sind in Fig. 3 genauer gezeigt und werden in ihrer Struktur und Funktion weiter unten beschrieben.

An dem vom Arbeitstisch 7 abgewandten stirnseitigen Ende des Federgehäuses 19 ist eine Kompensationsmasse 21 zu erkennen, die mit der zweiten Gabel 17 über eine (in den Figuren nicht zu erkennende) zweite Antriebsstange starr verbunden ist. In dem dem Aktor 13 gegenüberliegenden Seitenbereich des Federgehäuses 19 ist ein Positionssensor 23 für die zweite Gabel 17 angeordnet. Auch an der entsprechenden Seitenfläche des Arbeitstisches 17 ist ein inkrementaler Positionssensor 25 zur Erfassung der Position des Arbeitstisches 7 (und damit zugleich der ersten Gabel 15) angeordnet.

Fig. 3 zeigt noch detaillierter den inneren Aufbau der Linearantriebseinheit 1, und zwar insbesondere die im Federgehäuse 19 untergebrachten Komponenten. Die Bezugsziffern für die weiter oben bereits erläuterten Komponenten wurden in dieser Figur der besseren Übersichtlichkeit halber teilweise fortgelassen.

Es ist zu erkennen, daß die Gabeln 15 und 17 jeweils ein zylindrisches Gleitstück aufweisen, das mit dem jeweiligen Ausleger verschraubt und in seinen Abmessungen auf den (identischen) Durchmesser von vier Schraubenfedern 27, 29, 31 und 33 angepaßt ist, die jeweils an die Stirnseiten der Gleitstücke 15b, 17b anschließend im Federgehäuse 19 (Fig. 2) plaziert sind. An dem dem Arbeitstisch 7 zu- und dem Gleitstück 15b abgewandten Ende der ersten Schraubenfeder 27 ist eine scheibenförmige Widerlagerplatte 35 angeordnet, und in ähnlicher Weise ist an dem der Kompensationsmasse 21 zu- und dem Gleitstück 17b des zweiten Aktors 17 abgewandten Ende der vierten Schraubenfeder eine identisch geformte Widerlagerplatte 37 angeordnet. Die Widerlagerplatten 35, 37 sind (wie in Fig. 2 für die Widerlagerplatte 35 zu erkennen ist) in die stirnseitigen Enden des Federgehäuses 19 eingefügt. Die den Gleitstücken 15b, 17b abgewandten Enden der zweiten und dritten Schraubenfeder 29, 31 stützen sich gegen die gegenüberliegenden Oberflächen einer (in den Figuren nicht zu erkennenden) Zwischenwand des Federgehäuses 19 ab.

Es ist darauf hinzuweisen, daß sämtliche beweglichen Komponenten des Linearantriebes 1 - von dem Arbeitstisch 7 am einen Ende über die erste Antriebsstange 9, die erste Schraubenfeder 27, das Gleitstück 15b des ersten Aktors 15, die zweite Schraubenfeder 29, die dritte Schraubenfeder 31, das Gleitstück 17b der zweiten Gabel 17 und die in Fig. 3 nicht zu erkennende zweite Antriebsstange bis hin zur Kompensationsmasse 21 - auf einer Geraden angeordnet sind. Die Schraubenfedern liegen in einem entsprechend angepaßten Kanal des Federgehäuses 19, und die Antriebsstangen sind in zentralen Bohrungen der Widerlagerelemente 35, 37 geführt. Der eigentliche Antrieb wie auch der Kompensations-Antrieb - und beide in ihrem Zusammenwirken - arbeiten also streng linear, wodurch das Auftreten von Quermomenten praktisch völlig unterbunden wird.

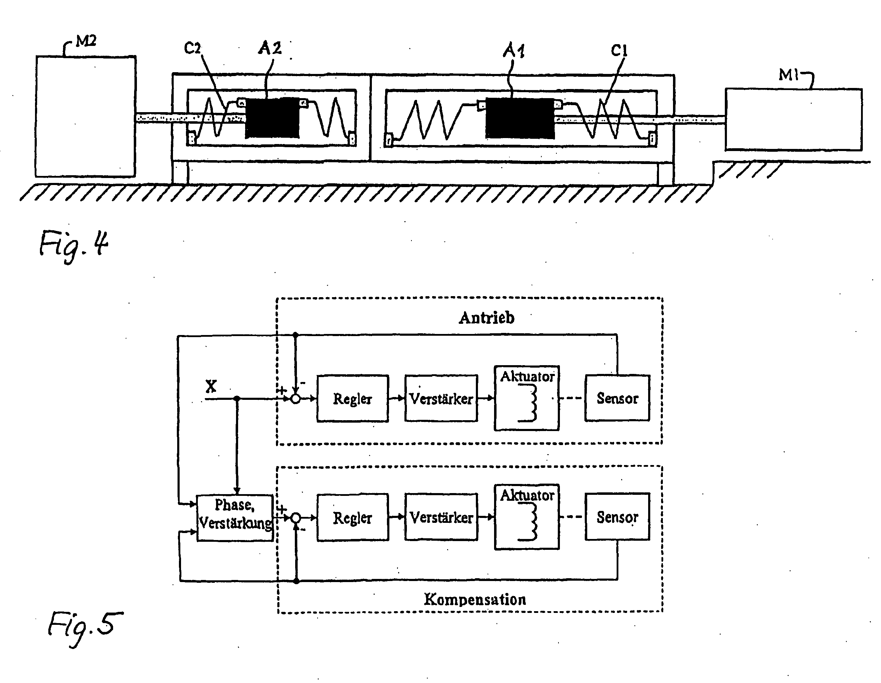

Die Funktionsweise der gezeigten Anordnung wird nachfolgend unter zusätzlicher Bezugnahme auf Fig. 4 beschrieben, die das Prinzip der aktiven Momentenkompensation in einer Prinzipdarstellung verdeutlicht. Diese Figur zeigt eine durch einen ersten Aktor A1, der mit einer ersten, gegen die Stirnwände eines ersten (nicht gesondert bezeichneten) Teilgehäuses abgestützten Federanordnung C1 zusammenwirkt und eine erste Last bzw. Masse M1 antreibt. Ein zweiter Aktor A2 wirkt mit einer zweiten Federanordnung C2 zusammen, die sich ebenfalls gegen die Stirnwände eines - mit dem ersten Teilgehäuse starr verbundenen - zweiten Teilgehäuses abstützt und treibt eine zweite Last bzw. Masse M2 (Kompensationsmasse) an.

Bei einer gegenphasigen Bewegung der beiden Teilanordnungen läßt sich, wenn die Massen M1, M2 und Federkonstanten bzw. Steifigkeiten der Federanordnungen C1, C2 geeignet abgestimmt sind, eine praktisch vollständige Kompensation der auf das aus den Teilgehäusen gebildete Gesamtgehäuse ausgeübten Kräfte (Momentenkompensation) erreichen. Genau dies wird auch bei der in Fig. 1 bis 3 gezeigten Anordnung bezüglich des Federgehäuses 19 und somit auch bezüglich des mit diesem starr verbundenen Antriebsgehäuses 3 erreicht.

In einer praktischen Ausführung der erläuterten Linearantriebseinheit für einen Zeilenscanner liegt die bewegte Masse des Arbeitstisches 7, netto bei 50 g insgesamt bei maximal 150 g, es wird eine Kompensationsmasse 21 von 600 g eingesetzt, und die Federsteifigkeiten werden für einen Resonanzbetrieb mit einer Frequenz von 20 Hz auf 2,4 N/mm für die erste Federanordnung (Bezugszeichen C1 in Fig. 4 bzw. 27 und 29 in Fig. 3) bzw. ca. 9,5 N/mm für die zweite Federanordnung (Bezugsziffer C2 in Fig. 4 bzw. 31 und 33 in Fig. 3) eingestellt. Aufgrund des Resonanzbetriebes kommt die Anordnung grundsätzlich mit einer Antriebskraft von wenigen Newton aus, und es sind Einschwingzeiten unterhalb von 0,5 s erreichbar. Bei den genannten Masse- und Federsteifigkeitswerten steht einer maximalen (benötigten) Auslenkung des Arbeitstisches von ca. ± 15 mm eine Bewegungsamplitude der Kompensationsmasse von ± 4 mm gegenüber. Die Auflösung im Scanbereich liegt bei 1 µm und der Taumelfehler unterhalb von 200 µrad.

In Fig. 5 ist schematisch das Wirkprinzip der Regelung dargestellt, wobei mit X eine vorgegebene Position des Arbeitstisches bezeichnet ist. Die Figur ist im übrigen selbsterklärend, so daß hier keine zusätzliche Erläuterung gegeben werden muß. Es versteht sich, daß zur Realisierung der Steuerfunktionen eine Kompensations-Steuereinheit vorgesehen ist, die nicht in der Fig. 1 bis 3 gezeigten Antriebseinheit selbst untergebracht ist.

Die Ausführung der Erfindung ist nicht auf das oben beschriebene Beispiel beschränkt, sondern ebenso mit Abwandlungen möglich, die im Rahmen fachgemäßen Handelns liegen. So sind anstelle von Schraubenfedern als Rückstellelemente grundsätzlich auch Elastomer-Elemente einsetzbar, und die Form und Anordnung der gezeigten Komponenten kann in Abhängigkeit von der konkreten Anwendung weitgehend variiert werden.

### Bezugszeichenliste

- 1: Linearantriebseinheit
- 3: Antriebsgehäuse
- 3a: Abschnitt mit verringerter Höhe
- 5: Deckplatte
- 7: Arbeitstisch
- 9: Antriebsstange
- 11, 13; A1, A2: Aktor
- 11a, 13a: Kurzschlußplatte
- 11b, 13b: Ringkern
- 11c, 13c: Permanentmagnet
- 15, 17: Gabel
- 15a, 17a: Antriebsspule
- 15b, 17b: Gleitstück
- 19: Federgehäuse
- 21: Kompensationsmasse
- 23, 25: Positionssensor
- 27, 29, 31, 33: Schraubenfeder
- 35, 37: Widerlagerplatte
- A1, A1: Aktuator
- C1, C2: Federanordnung
- M1, M2: Masse (Last)

## Patentansprüche

1. Elektromechanischer Linearantrieb, mit einem längs einer geradlinigen ersten Bewegungsbahn in beiden Bewegungsrichtungen über ein erstes elastisches Rückstellelement (27, 29; C1), welches gegen ein erstes Widerlager (35) abgestützt ist, in eine Ruhelage vorgespannten ersten Aktor (11; A1) und einer mit dem ersten Aktor im wesentlichen starr verbundenen und durch ihn angetriebenen ersten Last (7; M1),
**gekennzeichnet durch**
einen elektromechanischen Momentenkompensations-Antrieb (13, 21, 31, 33; A2, C2, M2), der aufweist:
- einen zweiten Aktor (13; A2) mit zur ersten Bewegungsbahn paralleler zweiter Bewegungsbahn, welcher über ein drittes elastisches Rückstellelement (31, 33; C2), das gegen ein drittes, starr mit dem ersten Widerlager verbundenes Widerlager (37) abgestützt ist, in Ruhelage vorgespannt ist,
- eine mit dem zweiten Aktor (13) im wesentlichen starr verbundene und **durch** ihn angetriebene zweite Last (21; M2) und
- eine Kompensations-Steuereinrichtung zur mit dem ersten Aktor (11) synchronisierten Ansteuerung des zweiten Aktors (13) zu einer gegenüber dem ersten Aktor gegenphasigen Bewegung.

2. Linearantrieb nach Anspruch 1,
**dadurch gekennzeichnet, daß**
die erste und zweite Bewegungsbahn zwei voneinander beabstandete Abschnitte einer Geraden sind.

3. Linearantrieb nach Anspruch 1 oder 2,
**dadurch gekennzeichnet, daß**
der erste Aktor (11; A1) über ein erstes und zweites elastisches Rückstellelement (27, 29; C1), welche gegen ein erstes bzw. zweites, starr miteinander verbundenes Widerlager (37) abgestützt sind, und der zweite Aktor (13; A2) über ein drittes und viertes elastisches Rückstellelement (31, 33; C2), die gegen ein drittes bzw. viertes, starr miteinander verbundenes Widerlager (37) abgestützt sind, in Ruhelage vorgespannt sind.

4. Linearantrieb nach einem der vorangehenden Ansprüche,
**dadurch gekennzeichnet , daß**
das erste und dritte, insbesondere das erste bis vierte, Widerlager durch Teile, insbesondere senkrecht zur ersten und zweiten Bewegungsbahn orientierte Widerlagerplatten (35, 37), eines Federgehäuses (19) gebildet sind, in dem das erste und dritte, insbesondere das erste bis vierte, Rückstellelement (27, 29, 31, 33) aufgenommen sind und das insbesondere starr mit einem Antriebsgehäuse (3) verbunden ist.

5. Linearantrieb nach einem der vorangehenden Ansprüche,
**dadurch gekennzeichnet, daß**
das erste und dritte, insbesondere das erste bis vierte, Rückstellelement Schraubenfedern (27, 29, 31, 33) sind.

6. Linearantrieb nach Anspruch 2, 4 und 5,
**dadurch gekennzeichnet , daß**
die erste und zweite Last (7, 21; M1, M2) über eine erste bzw. zweite Antriebsstange (9), die von den das erste und optionale zweite bzw. dritte und optionale vierte Rückstellelement (27, 29, 31,33) bildenden Schraubenfedern umgeben sind, über einen ersten bzw. zweiten Ausleger (15, 17) mit dem ersten bzw. zweiten Aktor (11, 13) verbunden ist.

7. Linearantrieb nach einem der vorangehenden Ansprüche,
**dadurch gekennzeichnet, daß**
die erste Last einen Arbeitstisch (7), insbesondere für einen Zeilenscanner, umfaßt.

8. Linearantrieb nach einem der vorangehenden Ansprüche,
**dadurch gekennzeichnet, daß**
die zweite Last (21; M2) eine wesentlich, insbesondere um einen Faktor 2 bis 10, größere Masse als die erste Last (M1) und die erste Bewegungsbahn eine wesentlich, insbesondere um einen Faktor 2 bis 10, größere Amplitude als die zweite Bewegungsbahn aufweist.

9. Linearantrieb nach einem der vorangehenden Ansprüche,
**dadurch gekennzeichnet, daß**
der ersten und zweiten Last (7, 21) oder dem ersten und zweiten Aktor (11, 13) jeweils Positionssensoren (23, 25) zugeordnet sind, die mit Eingängen der Kompensations-Steuereinrichtung verbunden sind und insbesondere inkremental arbeiten.

10. Linearantrieb nach Anspruch 8 und 9,
**dadurch gekennzeichnet, daß**
die Amplitude der ersten und zweiten Bewegungsbahn über einen Regelkreis unter Nutzung der Signale der Positionssensoren (23, 25) konstant gehalten wird.

11. Linearantrieb nach einem der vorangehenden Ansprüche,
**dadurch gekennzeichnet, daß**
die Massen der ersten und zweiten Last (7, 21; M1, M2) und die Federkonstanten des ersten und dritten, insbesondere des ersten bis vierten, Rückstellelementes (27, 29, 31, 33; C1, C2) derart vorbestimmt sind, daß der Momentenkompensations-Antrieb auf die gleiche Eigenresonanzfrequenz abgeglichen ist wie der den ersten Aktor (11) beinhaltende Antrieb.

12. Linearantrieb nach einem der Ansprüche 3 bis 11,
**dadurch gekennzeichnet, daß**
das erste und zweite Rückstellelement (27, 29; C1) sowie das dritte und vierte Rückstellelement (31, 33; C2) jeweils durch ein einziges Druck- und Zugfederelement gebildet sind.

## Claims

1. Electromechanical linear drive, comprising a first actuator (11; A1) biased into a rest position alongside of a linear first path of motion in both directions of motion by a first resilient restoring element (27, 29; C1) which is supported against a first abutment (35), and a first load (7; M1) substantially rigidly connected to and driven by the first actuator,
**characterized by**
an electromechanical moment compensation drive (13, 21, 31, 33; A2, C2, M2), comprising:
- a second actuator (13; A2) having a second path of motion parallel to the first path of motion and biased into a rest position by a third resilient restoring element (31, 33; C2) which is supported against a third abutment (37) rigidly connected to the first abutment,
- a second load (21; M2) substantially rigidly connected to and driven by the second actuator (13), and
- a compensation control device for driving synchronously with the first actuator (11) the second actuator (13) into an antiphase motion with respect to the first actuator.

2. Linear drive according to claim 1,
**characterized in that**
the first and second paths of motion are two sections of a straight line spaced apart from each other.

3. Linear drive according to claim 1 or 2,
**characterized in that**
the first actuator (11; A1) is biased into a rest position by a first and second resilient restoring element (27, 29; C1), which are supported against a first and a second abutment (37) rigidly connected to each other, and that the second actuator (13; A2) is biased into a rest position by a third and fourth resilient restoring element (31, 33; C2), which are supported against a third and a fourth abutment (37) rigidly connected to each other.

4. Linear drive according to one of the preceding claims,
**characterized in that**
the first and third, specifically the first to fourth abutments are formed by parts, specifically abutment plates (35, 37) oriented perpendicularly to the first and second path of motion, of a spring housing (19) in which the first and third, specifically the first to fourth restoring elements (27, 29, 31, 33) are accommodated and which is specifically rigidly connected to a drive housing (3).

5. Linear drive according to one of the preceding claims,
**characterized in that**
the first and third, specifically the first to fourth restoring elements are helical springs (27, 29, 31, 33).

6. Linear drive according to claim 2, 4 and 5,
**characterized in that**
the first and second load (7, 21; M1, M2) are connected via a first and second driving rod (9), which are surrounded by the helical springs forming the first and the optional second and, respectively, the third and the optional fourth restoring elements (27, 29, 31, 33), by a first and second bracket (15, 17) to the first and second actuator (11, 13).

7. Linear drive according to one of the preceding claims,
**characterized in that**
the first load comprises a work table (7), specifically for a line scanner.

8. Linear drive according to one of the preceding claims,
**characterized in that**
the second load (21; M2) has a substantially greater mass than the first load (M1), specifically by a factor 2 to 10, and that the first path of motion has a substantially greater amplitude than the second path of motion, specifically by a factor 2 to 10.

9. Linear drive according to one of the preceding claims,
**characterized in that**
position sensors (23, 25) connected to inputs of the compensation control device and operating specifically incrementally are each assigned to the first and second loads (7, 21) or to the first and second actuators (11, 13).

10. Linear drive according to claim 8 and 9,
**characterized in that**
the amplitude of the first and second paths of motion is kept constant by a control circuit using the signals from the position sensors (23, 25).

11. Linear drive according to one of the preceding claims,
**characterized in that**
the masses of the first and second loads (7, 21; M1, M2) and the spring constants of the first and third, specifically of the first to fourth restoring elements (27, 29, 31, 33; C1, C2) are predetermined in such a way that the moment compensation drive is adjusted to the same self-resonance frequency as the drive including the first actuator (11).

12. Linear drive according to one of claims 3 to 11
**characterized in that**
the first and second restoring elements (27, 29; C1) as well as the third and fourth restoring elements (31, 33; C2) are each formed by a single compression and extension spring element.

## Revendications

1. Entraînement linéaire électromécanique, comprenant un premier actionneur (11 ; A1) précontraint dans une position de repos le long d'une première voie de déplacement rectiligne dans les deux directions de déplacement via un premier élément de rappel élastique (27, 29 ; C1) qui s'appuie contre une première butée (35), et une première charge (7 ; M1) reliée de façon sensiblement rigide au premier actionneur et entraînée par celui-ci,
**caractérisé par**
un entraînement de compensation de couple électromécanique (13, 21, 31, 33 ; A2, C2, M2), qui comprend :
- un second actionneur (13 ; A2) avec une seconde voie de déplacement, parallèle à la première voie de déplacement, qui est précontrainte dans une position de repos via un troisième élément de rappel élastique (31, 33 ; C2) qui s'appuie contre une troisième butée (37) relié rigidement à la première butée,
- une seconde charge (21 ; M2) reliée de façon sensiblement rigide au deuxième actionneur (13) et entraînée par celui-ci, et
- un dispositif de commande de compensation pour piloter, de manière synchronisée avec le premier actionneur (11), le second actionneur (13) pour un mouvement en opposition de phase par rapport au premier actionneur.

2. Entraînement linéaire selon la revendication 1,
**caractérisé en ce que** la première et la seconde voie de déplacement sont deux tronçons écartés l'un de l'autre d'une droite.

3. Entraînement linéaire selon la revendication 1 ou 2,
**caractérisé en ce que** le premier actionneur (11 ; A1) est précontraint en position de repos via un premier et un second élément de rappel élastique (27, 29 ; C1), qui s'appuient contre une première et une seconde butée (37) reliées rigidement l'une à l'autre, et le second actionneur (13 ; A 2) est précontraint en position de repos via un troisième et un quatrième élément de rappel élastique (31, 33 ; C2), qui s'appuient contre une troisième et une quatrième butée (37) reliées rigidement l'une à l'autre.

4. Entraînement linéaire selon l'une des revendications précédentes,
**caractérisé en ce que** la première et la troisième butée, et en particulier de la première à la quatrième, sont formées par des parties, en particulier des plaques de butée (35, 37) orientées perpendiculairement à la première et à la seconde voie de déplacement, d'un boîtier à ressort (19) dans lequel sont reçus le premier et le troisième élément de rappel (27, 29, 31, 33), en particulier du premier au quatrième, et qui est en particulier relié rigidement à un boîtier d'entraînement (3).

5. Entraînement linéaire selon l'une des revendications précédentes,
**caractérisé en ce que** le premier et le troisième élément de rappel, en particulier du premier au quatrième, sont des ressorts à boudin (27, 29, 31, 33).

6. Entraînement linéaire selon les revendications 2, 4 et 5,
**caractérisé en ce que** la première et la seconde charge (7, 21 ; M1, M2) sont reliées au premier et au second actionneur (11, 13) via une première et une seconde barre d'entraînement (9) qui sont entourées par les ressorts à boudin qui forment le premier et en option le second ou respectivement le troisième et en option le quatrième élément de rappel (27, 29, 31, 33), par l'intermédiaire d'un premier et d'un second bras (15, 17).

7. Entraînement linéaire selon l'une des revendications précédentes,
**caractérisé en ce que** la première charge comprend une table de travail (7), en particulier pour un scanneur en ligne.

8. Entraînement linéaire selon l'une des revendications précédentes,
**caractérisé en ce que** la seconde charge (21 ; M2) présente une masse sensiblement plus importante, en particulier d'un facteur 2 à 10, que la première charge (M1), et la première voie de déplacement présente une amplitude sensiblement plus importante, en particulier d'un facteur 2 à 10, que la seconde voie de déplacement.

9. Entraînement linéaire selon l'une des revendications précédentes,
**caractérisé en ce que**, à la première et à la seconde charge (7, 21) ou au premier et au second actionneur (11, 13), sont associés des capteurs de position (23, 25) qui sont reliés à des entrées du dispositif de commande de compensation et qui fonctionnent en particulier de façon incrémentale.

10. Entraînement linéaire selon la revendication 8 et 9,
**caractérisé en ce que** l'amplitude de la première et de la seconde voie de déplacement est maintenue constante via un circuit de régulation en utilisant les signaux des capteurs de position (23, 25).

11. Entraînement linéaire selon l'une des revendications précédentes,
**caractérisé en ce que** les masses de la première et de la seconde charge (7, 21 ; M1, M2) et les constantes élastiques du premier et du troisième, en particulier du premier au quatrième, éléments de rappel (27, 29, 31, 33 ; C1, C2) sont prédéterminées de telle façon que l'entraînement de compensation de couple est égalisé à la même fréquence de résonance propre que l'entraînement qui contient le premier actionneur (11).

12. Entraînement linéaire selon l'une des revendications 3 à 11,
**caractérisé en ce que** le premier et le second élément de rappel (27, 29 ; C1) ainsi que le troisième et le quatrième élément de rappel (31, 33 ; C2) sont formés respectivement par un unique élément à ressort de compression et de traction.
